# EUROPÄISCHE PATENTSCHRIFT

(11) **EP 1 669 148 B1**
(45) Veröffentlichungstag und Bekanntmachung des Hinweises auf die Patenterteilung: **17.01.2018**
(21) Anmeldenummer: 04405770.1
(22) Anmeldetag: 13.12.2004
(51) Int. Cl.: B23B 37/00, B23B 29/12, B06B 1/06, B24B 1/04

(54) **Werkzeugeinheit zur ultraschallunterstützten rotativen Bearbeitung**
Tool-unit for ultrasonic rotational machining
Ensemble porte-outils d'usinage rotatif assisté par ultra-sons

(43) Veröffentlichungstag der Anmeldung: 14.06.2006
(73) Patentinhaber: Fritz Studer AG, 3612 Steffisburg (CH)
(72) Erfinder: Fiebelkorn Frank, CH-3600 Thun (CH); Stadler Paul, CH-3400 Burgdorf (CH); Fankhauser Thomas, CH-3007 Bern (CH)
(74) Vertreter: AMMANN PATENTANWÄLTE AG BERN

(56) Entgegenhaltungen:
- EP-A- 0 646 435
- DE-A1- 3 606 304
- DE-A1- 4 104 350
- PATENT ABSTRACTS OF JAPAN Bd. 008, Nr. 238 (M-335), 31. Oktober 1984 (1984-10-31) -& JP 59 118306 A (YAMAGUCHI KIKAI KENKYUSHO:KK), 9. Juli 1984 (1984-07-09)

## Beschreibung

Die vorliegende Erfindung bezieht sich auf eine Werkzeugeinheit zur ultraschallunterstützten rotativen Bearbeitung eines Werkstücks gemäss Oberbegriff des Patentanspruchs 1 sowie auf eine Anordnung mit einer solchen Werkzeugeinheit und einer Werkzeugspindel.

Bei der rotativen Bearbeitung von sprödharten oder schwer spanbaren Werkstoffen, beispielsweise Keramiken, Glas oder Hartmetallen, kann das Bearbeitungswerkzeug so stark beansprucht werden, dass es einem vorzeitigen Verschleiss unterworfen ist. Um die Standzeit zu erhöhen, ist es bekannt, Ultraschallschwingungsbewegungen der Werkzeugdrehbewegung zu überlagern und so Ultraschallschwingungen auf das Werkzeug bzw. das Werkstück einzuleiten. Dadurch wird eine veränderte Bearbeitungskinematik erzeugt, wobei die Ultraschallschwingungen den Materialabtrag günstig beeinflussen.

Aus den Schriften DE-A1-41 03 569 und EP-A1-591 104 sind Werkzeugvorrichtungen bekannt, welche für eine derartige kombinierte Bearbeitung geeignet sind. Diese haben den Nachteil, dass sie nicht in gängigen Werkzeugspindeln gehalten werden können, sodass die Bearbeitungsmaschine speziell für die Verwendung einer solchen Werkzeugvorrichtung auszulegen ist. Es ist daher nicht oder nur erschwert möglich, auch andere Werkzeuge, die z.B. ausschliesslich zur rotativen Bearbeitung dienen, in derselben Bearbeitungsmaschine einzusetzen. Insbesondere sind die bekannten Werkzeugvorrichtungen nicht geeignet, um eine bestehende Bearbeitungsmaschine, z.B. Rundschleifmaschine, auf einfache Weise so nachzurüsten, dass zusätzlich die ultraschallunterstützte Bearbeitung möglich ist. So ist z. B. bei der Vorrichtung gemäss der DE-A1-41 03 569 der Konverter mit dem Werkzeug über zwei Stützflansche, welche die Knoten der Ultraschallschwingungen festlegen, direkt an der Welle abgestützt und daher für eine einfache Auswechlung ungeeignet. Auch sind die bekannten Werkzeugvorrichtungen relativ voluminös, sodass sie sich nicht für einen Einsatz bei hohen Drehzahlen der Werkzeugspindel eignen.

Aus der DE 41 04 350 A1 ist eine Werkzeugeinheit gemäss Oberbegriff des Anspruches 1 bekannt. Auch diese Werkzeugeinheit ist relativ ausladend aufgebaut und daher für niedrige Drehzahlen ausgelegt.

Ausgehend von diesem Stand der Technik ist es eine Aufgabe der vorliegenden Erfindung, eine Werkzeugeinheit der eingangs erwähnten Art anzugeben, welche in einer Werkzeugspindel gehalten werden kann, leicht auswechselbar ist und einen möglichst kompakten Aufbau aufweist.

Eine Werkzeugeinheit, die diese Aufgabe löst, ist im Anspruch 1 angegeben. Die weiteren Ansprüche geben bevorzugte Ausführungen sowie eine Anordnung mit einer Werkzeugspindel an.

Die Erfindung wird im Folgenden anhand eines bevorzugten Ausführungsbeispiels unter Bezugnahme auf Figuren erläutert. Es zeigen
Fig. 1 eine geschnittene Seitenansicht der erfindungsgemässen Werkzeugeinheit, welche in einer Werkzeugspindel gehalten ist;
Fig. 2 eine Seitenansicht des Werkzeugs der Werkzeugeinheit gemäss Fig. 1;
Fig. 3 eine perspektivische Ansicht der Anordnung von Werkzeugeinheit und Werkzeugspindel gemäss Fig. 1 von hinten; und
Fig. 4 eine perspektivische Ansicht der Anordnung gemäss Fig. 1 von vorne.

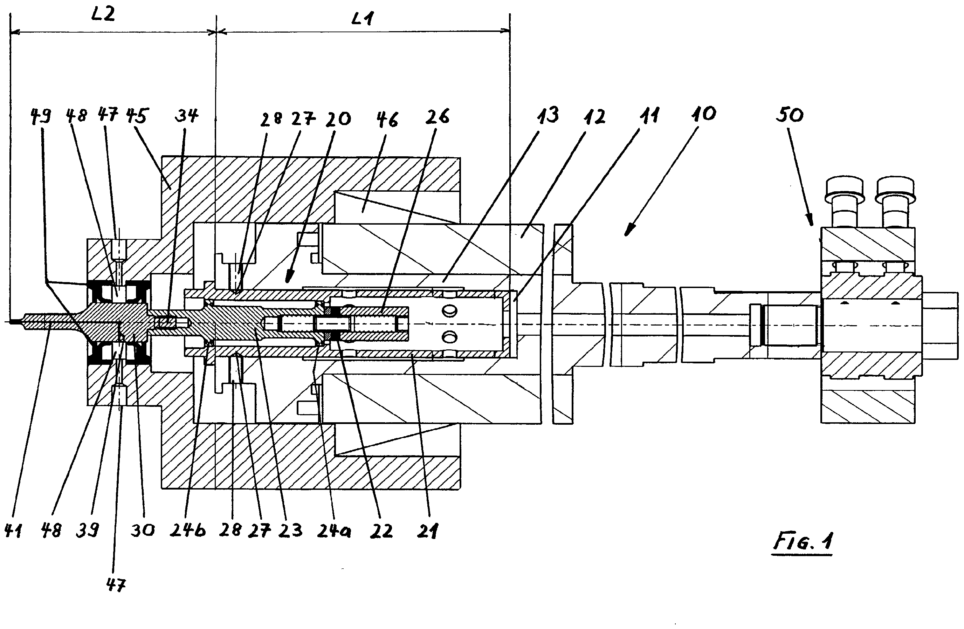

Figur 1 zeigt die Werkzeugeinheit 20, welche in die Aufnahme 11 der Werkzeugspindel 10 eingeschoben ist und als auswechselbares Werkzeugmodul ausgestaltet ist. Die Werkzeugeinheit 20 umfasst einen Halter 21, in welchem ein Konverter 23 mit mindestens einem elektroakustischen Wandler 22 zum Erzeugen und Übertragen von Ultraschallschwingungen angeordnet ist, sowie ein Werkzeug 30, welches an den Konverter 23 gekoppelt ist.

Der Halter 21 ist im Beispiel gemäss Figur 1 in Form einer Hülse ausgebildet und zumindest teilweise in die Aufnahme 11 der Werkzeugspindel 10 eingeführt. Der Konverter 23 ist an zwei Stützstellen 24a und 24b durch den Halter 21 gehalten, wobei ihre jeweilige Lage einem Schwingungsknoten der sich ausbildenden Ultraschallschwingungen entspricht. Die Stützstellen 24a und 24b sind jeweils durch eine ringförmige Abstufung gebildet. Je nach Anwendungszweck können auch mehr als zwei Stützstellen vorgesehen werden.

Der Wandler 22, welcher die elektrischen Schwingungen in mechanische umwandelt, ist beispielsweise piezoelektrischer oder magnetostriktiver Art. Dazu ist eine Scheibe 22 oder sind mehrere Scheiben aus piezokeramischem oder magnetostriktivem Material im Inneren des freistehenden Endteils 26 des Konverters 23 untergebracht. Der Wandler 22 ist so gewählt, dass er vorzugsweise im niederen wie auch hohen Frequenzbereich, insbesondere mehr als 50 kHz, betreibbar ist. Die Verwendung von Wandlern 22 mit höheren Frequenzen erlaubt es in der Regel, den Aufbau der Werkzeugeinheit 20 kompakter zu gestalten.

Der Halter 21 umfasst zur Bildung einer lösbaren Verbindung mit der Werkzeugspindel 10 mindestens ein Verbindungsmittel 27, welches entsprechend an die verwendete Schnittstelle der Werkzeugspindel adaptiert ist. Im Beispiel gemäss Figur 1 weisen der Halter 21 mindestens eine Klemmstelle 27 und der Kopf der Werkzeugspindel 10 mindestens eine Querbohrung 28 auf. Durch diese ist zur Fixation der Werkzeugeinheit 20 in der Aufnahme 11 eine Schraube (nicht dargestellt) führbar, welche auf die Klemmstelle 27 wirkt. Zur Bildung einer derartigen Schraubklemmverbindung können auch mehrere Klemmstellen 27 und entsprechende Querbohrungen 28 vorgesehen sein.

Wird eine Hohlschaftkegel-Schnittstelle verwendet, so ist der Halter 21 zur Bildung des Verbindungsmittels mit einer entsprechenden konischen Aussenfläche versehen. Wird eine Schnittstelle verwendet, mittels welcher ein Werkzeug durch eine lösbare Klebe- und/oder Schrumpfverbindung gehalten ist, so ist das Verbindungsmittel 27 entsprechend ausgestaltet, um die Werkzeugeinheit 20 in der Werkzeugspindel aufnehmen und halten zu können. Als Schnittstelle ist auch eine Gewindeverbindung geeignet, bei welcher die Aufnahme 11 der Werkzeugspindel 10 mit einem Innengewinde und der Halter 21 mit einem entsprechenden Aussengewinde versehen sind.

An das vordere Ende des Konverters 23 ist das Werkzeug 30 angekoppelt, welches so ebenfalls in Schwingung versetzbar ist und somit auch als Sonotrode bezeichnet wird. Das Werkzeug 30 ist aus Titan, Aluminium oder gehärtetem Stahl wie CPM hergestellt.

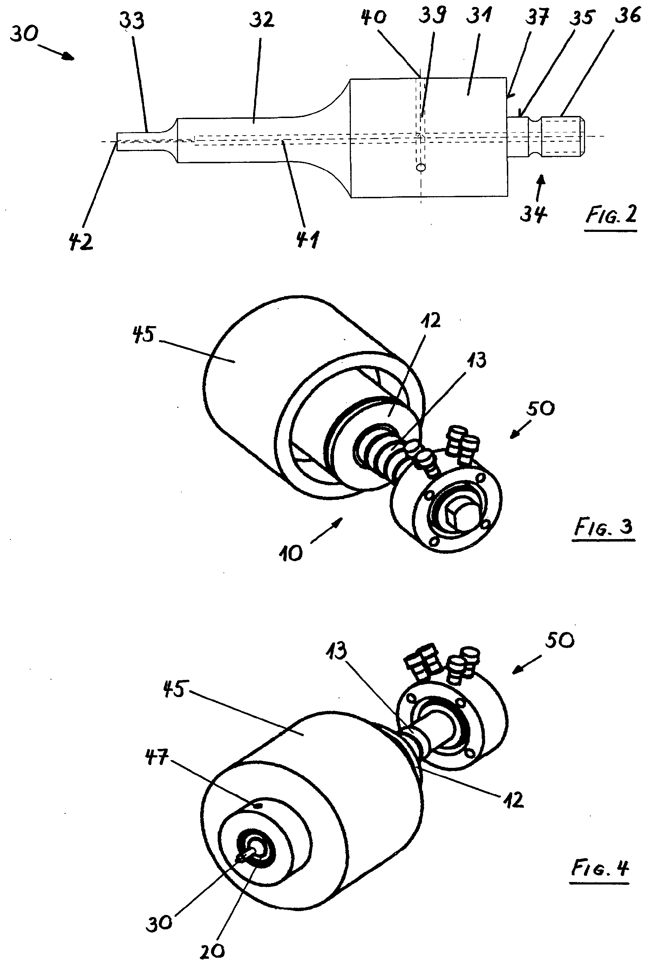

Wie auch Figur 2 zeigt, umfasst das Werkzeug 30 einen ersten zylindrischen Werkzeugteil 31, der in einen zweiten Werkzeugteil 32 mit kleinerem Durchmessers übergeht. An der Spitze des Werkzeugs 30 befindet sich der Werkzeugkörper 33, welcher mit dem zu bearbeitenden Werkstück in Kontakt gebracht wird. Die Formgebung des Werkzeugs 30 kann so gewählt sein, dass diese amplitudenverstärkend wirkt und die vom Wandler 22 erzeugten Ultraschallschwingungen in gewünschtem Masse verstärkt werden. In typischen Anwendungen liegt die Amplitude, mit welcher die Werkzeugspitze schwingt, im Bereich von 0 bis etwa 20 Mikrometer. Die Sonotrode 30 kann auch anders als in Figur 2 gezeigt geformt sein wie etwa kegelig oder nur zylindrisch. Denkbar ist auch das Dazwischenschalten eines sogenannten Boosters zwischen Konverter 23 und Sonotrode 30 zur weiteren Verstärkung der Amplitude.

Endseitig am ersten Werkzeugteil 31 befindet sich ein Anschlussstück 34 mit einer axialen Zentrierfläche 35 und einem daran anschliessenden Gewinde 36, welches in die Bohrung des Konverters 23 eingreift. Die Zentrierfläche 35 ist - wie in Figur 2 gezeigt - zylindrisch; sie kann jedoch auch anders gestaltet sein z.B. kegelig. Die Endseite des ersten Werkzeugteils 31 ist als radiale Zentrierfläche 37 ausgebildet. Die Zentrierflächen 35 und 37 gewährleisten, dass das Werkzeug 30 in axialer und radialer Richtung zentriert an den Konverter 23 gekoppelt ist und dieses somit ohne Unwucht drehbar ist.

Der Werkzeugkörper 33 ist entsprechend der Bearbeitungsart ausgestaltet. Zum Schleifen ist dieser als Schleifkörper ausgebildet, welcher gegebenenfalls mit einer Diamant- oder CBN-Schicht versehen ist. Der zweite Werkzeugteil 32 kann zusammen mit dem Schleifkörper 33 einstückig hergestellt und direkt mit Schleifbelag beschichtet sein. Es ist auch denkbar, den Schleifkörper 33 als separates Teil vorzusehen, welches am zweiten Werkzeugteil 32 durch eine lösbare Verbindung aufgenommen ist, beispielsweise durch Schrauben, Schrumpfen, Klemmen, Löten und/oder Kleben.

Wie insbesondere Figur 2 zeigt, ist das Werkzeug 30 mit einer radialen Bohrung 39 versehen, welche eine Einlassöffnung 40 aufweist und in einer axialen Bohrung 41 mündet, die an der Werkzeugspitze eine Auslassöffnung 42 aufweist. Die Bohrungen 39 und 41 bilden einen Kanal, durch welchen Kühlmittel in Form einer Flüssigkeit leitbar ist. Dadurch kann durch das drehende Werkzeug 30 hindurch über die Auslassöffnung 42 Kühlmittel zur Kühlung und/oder Schmierung ausgespritzt und so die Standzeit des Werkzeug 30 erhöht sowie die Qualität der bearbeiteten Werkstückflächen verbessert werden.

Wie auch die Figuren 3 und 4 zeigen, umfasst die Werkzeugspindel 10 ein stehendes Teil 12, in welchem die Welle 13 mit der Spindelaufnahme 11 drehbar gelagert ist und an welchem aussen eine Glocke 45 mittels Spannbüchse 46 oder Schraubenklemmung befestigt ist. Die Glocke 45 umschliesst den vorderen Teil der Welle 13 und ist mit Kühlmittelanschlüssen 47 sowie Bohrungen 48 versehen, über welche Kühlmittel in die Einlassöffnung 40 leitbar ist. Zwischen den stehenden Bohrungen 48 und dem drehbaren Werkzeug 30 befinden sich Dichtmittel 49 beispielsweise in Form einer Labyrinthdichtung.

Ist die Werkzeugeinheit 20 ausschliesslich für eine Trockenbearbeitung vorgesehen, so kann das Werkzeug 30 natürlich auch ohne die Öffnungen 40, 42 und Kanälen 39, 41 ausgestaltet sein.

Die Werkzeugeinheit 20 weist einen kompakten Aufbau auf mit einer Gesamtlänge von L = L1 + L2, wobei L1 die Länge des Teils bezeichnet, welche sich in der Spindelaufnahme 11 befindet, und L2 die Länge des Teils, welche aus der Werkzeugspindel 10 herausragt und somit freistehend ist. Die Werkzeugeinheit 20 ist derart ausgestaltet, dass L2 kleiner als 100 mm und vorzugsweise kleiner als 50 mm ist. Typischerweise ist L1 kleiner als 150 mm und vorzugsweise kleiner als 100 mm ist. Der kompakte Aufbau erlaubt es, die Werkzeugeinheit 30 auch bei hohen Drehzahlen einzusetzen, insbesondere Drehzahlen über 60 000 Umdrehungen pro Minute. Um diese Drehzahlen zu erreichen, ist die Werkzeugspindel 10 entsprechend ausgestaltet, z.B. als Hochfrequenzspindel oder Spindel mit angekoppelten Antriebsmotoren.

Ist der Wandler 22 piezoelektrischer Art, so sind an einen Generator anschliessbare Schleifringe 50 vorgesehen, welche an der Welle 13 der Werkzeugspindel 10 angekoppelt sind und über welche die Stromzufuhr zum Wandler 22 erfolgt. Die Materialien für die Schleifringe 50 sind so gewählt, dass sie für den Einsatz bei den zu erreichenden Drehzahlen der Werkzeugspindel 10 geeignet sind.

Ist der Wandler 22 magnetostriktiver Art, so ist mindestens eine Erregerspule vorgesehen (nicht dargestellt), welche z.B. in der Glocke 45 oder im stehenden Teil 12 der Werkzeugspindel 10 untergebracht ist und mittels welcher der Wandler 22 berührungsfrei durch magnetische Induktion mit Energie versorgbar ist.

Die hier beschriebene Werkzeugeinheit 30 ist beispielsweise in Werkzeugmaschinen für die Feinbearbeitung wie Schleifmaschinen, insbesondere Rundschleifmaschinen, oder Fräsmaschinen einsetzbar. Je nach Ausgestaltung des Werkzeugs 33 kann die Werkzeugeinheit 30 auch zur ultraschallunterstützten Bearbeitung in anderen Bearbeitungsverfahren angewendet werden wie Bohren, Drehen, Reiben, Honen, Entgraten, etc. Die Werkzeugeinheit 30 ist u.a. für die Bearbeitung von sprödharten oder schwer spanbaren Werkstoffen geeignet - beispielsweise Keramiken, Werkstoffen aus CBN (kubischem Bornitrid), Werkstoffen aus PKD (polykristallinem Diamant), Cermets, Hartmetallen, etc.
- und/oder für die Bearbeitung von herkömmlichen Werkstoffen
- beispielsweise Stahlwerkstoffen, Nichteisenmetallen, Sinterwerkstoffen, Kunststoffen, etc.

Soweit nicht schon beschrieben, weist die erfindungsgemässe Werkzeugeinheit folgende Vorteile auf:
- Die Werkzeugeinheit ist als auswechselbare Einheit ausgebildet und kann mit anderen Werkzeugen auf derselben Maschinenspindel eingesetzt werden. Es ist auch möglich, bestehende Bearbeitungsmaschinen, welche bis anhin nur zur rotativen Bearbeitung verwendet wurden, für eine zusätzliche ultraschallunterstützte Bearbeitung nachzurüsten.
- Die Werkzeugeinheit weist einen kompakten Aufbau auf. Sie ist so auslegbar, dass auch eine Bearbeitung bei Drehzahlen über 60 000 Umdrehungen pro Minute möglich ist und dass sowohl einer axialen wie radialen Bearbeitung des Werkstücks Schwingungen überlagerbar sind, die auch über 50 kHz liegen können.

## Patentansprüche

1. Werkzeugeinheit zur ultraschallunterstützten rotativen Bearbeitung eines Werkstücks enthaltend:
einen Konverter (23) mit mindestens einem elektroakustischen Wandler (22) zum Erzeugen und Übertragen von Ultraschallschwingungen,
ein Werkzeug (30), welches an den Konverter gekoppelt ist, und
einen Halter (21), in welchem der Konverter mit dem Wandler angeordnet ist und
welcher mindestens teilweise durch eine in einer Welle (13) einer Werkzeugspindel (10) gebildete Aufnahmeöffnung hindurch in die Aufnahme (11), welche in der Welle (13) der Werkzeugspindel (10) gebildet ist, einführbar und mit dieser mittels lösbarer Verbindung (27) verbindbar ist, **dadurch gekennzeichnet, dass**
der Konverter (23) an einer ersten Stützstelle (24b) und mindestens einer weiteren Stützstelle (24a) durch den Halter (21) gehalten ist, welche Stützstellen (24a, 24b) Schwingungsknoten der erzeugten Ultraschallschwingungen definieren, wobei nach Einführen der Werkzeugeinheit in die Aufnahme (11) der freistehende Teil der Werkzeugeinheit, welcher aus der Welle (13) herausragt, eine Länge (L2) aufweist, die kleiner als 100 mm ist, und die erste Stützstelle (24b) im freistehenden Teil so angeordnet ist, dass sie sich bei der Aufnahmeöffnung unmittelbar ausserhalb der Welle (13) befindet.

2. Werkzeugeinheit nach Anspruch 1, **dadurch gekennzeichnet, dass** der Halter (21) zur Bildung der lösbaren Verbindung mindestens eine Klemmstelle (27), ein Gewinde, eine konische Aussenfläche und/oder zylindrische Aussenfläche umfasst.

3. Werkzeugeinheit nach Anspruch 1 oder 2, **dadurch gekennzeichnet, dass** sie derart ausgestaltet ist, dass sie nach Einführen in die Aufnahme (11) der Werkzeugspindel (10) mit einer Länge (L2) aus derselben herausragt, die kleiner als 50 mm ist.

4. Werkzeugeinheit nach einem der Ansprüche 1 bis 3, **dadurch gekennzeichnet, dass** das Werkzeug (30) seitlich mindestens eine Einlassöffnung (40) und am Kopf mindestens eine Auslassöffnung (42) aufweist, wobei die beiden Öffnungen durch einen Kanal (39, 41) verbunden sind.

5. Werkzeugeinheit nach einem der Ansprüche 1 bis 4, **dadurch gekennzeichnet, dass** das Werkzeug (30) als Sonotrode aus Titan, Stahl oder Aluminium ausgebildet ist.

6. Werkzeugeinheit nach einem der Ansprüche 1 bis 5, **dadurch gekennzeichnet, dass** das Werkzeug (30) ein Schleif- oder Fräswerkzeug ist.

7. Werkzeugeinheit nach einem der Ansprüche 1 bis 6, **dadurch gekennzeichnet, dass** der zur Bearbeitung dienende Werkzeugkörper (30) mittels lösbarer Verbindung am Werkzeug befestigt ist.

8. Werkzeugeinheit nach einem der Ansprüche 1 bis 7, **dadurch gekennzeichnet, dass** der Wandler (22) ein piezoelektrischer oder magnetostriktiver Wandler ist.

9. Werkzeugeinheit nach einem der Ansprüche 1 bis 8, **dadurch gekennzeichnet, dass** der Wandler (22) mit einer Frequenz von mindestens 50 kHz betreibbar ist.

10. Anordnung mit einer Werkzeugeinheit nach einem der Ansprüche 1 bis 9 und einer Werkzeugspindel (10), welche eine vorgegebene Schnittstelle aufweist zum Halten der Werkzeugeinheit und mindestens eines anderen Werkzeugs, insbesondere Schleifwerkzeugs.

11. Anordnung nach Anspruch 10, wobei zur Energieversorgung des Wandlers (22) die Werkzeugspindel (10) an einen Generator anschliessbare Schleifringe (50) aufweist und/oder die Anordnung mindestens eine Erregerspule umfasst.

12. Anordnung nach Anspruch 10 oder 11, wobei sie ausgelegt ist für Drehzahlen der Werkzeugspindel (10) von über 60 000 Umdrehungen pro Minute.

## Claims

1. Tool unit for the ultrasonically assisted rotary machining of a workpiece, comprising:
a converter (23) with at least one electroacoustic transducer (22) for generating and transmitting ultrasonic oscillations,
a tool (30), which is coupled to the converter, and
a holder (21), in which the converter with the transducer is arranged and
which is insertable through a seat opening formed in a shaft (13) of a tool spindle (10) at least partially in the seat (11) formed in the shaft (13) of the tool spindle (10) and connectable thereto by means of a detachable connection (27), **characterized in that**
the converter (23) is retained in the holder (21) at a first supporting location (24b) and at least another supporting location (24a), which supporting locations (24a, 24b) define nodes of the generated ultrasonic oscillations, wherein, after inserting the tool unit into the seat (11), the free-standing part of the tool unit, which projects from the shaft (13), has a length (L2), which is smaller than 100 mm, and the first supporting location (24b) is arranged in the free-standing part such that it is located at the seat opening directly outside the shaft (13).

2. Tool unit according to claim 1, **characterized in that** the holder (21) comprises at least one clamping location (27), a thread, a conical external surface, and/or a cylindrical external surface for forming the detachable connection.

3. Tool unit according to claim 1 or 2, **characterized in that** it is so designed that, when inserted in the seat (11) of the tool spindle (10), it projects from the latter by a length (L2) which is smaller than 50 mm.

4. Tool unit according to one of claims 1 to 3, **characterized in that** the tool (30) comprises laterally at least one inlet opening (40) and at least one outlet opening (42) at the head, wherein the two openings are connected by a channel (39, 41).

5. Tool unit according to one of claims 1 to 4, **characterized in that** the tool (30) is in the form of a sonotrode made of titanium, steel, or aluminum.

6. Tool unit according to one of claims 1 to 5, **characterized in that** the tool (30) is a grinding or milling tool.

7. Tool unit according to one of claims 1 to 6, **characterized in that** the tool body (30), which serves for machining, is fastened to the tool by a detachable connection.

8. Tool unit according to one of claims 1 to 7, **characterized in that** the transducer (22) is a piezoelectric or magnetostrictive transducer.

9. Tool unit according to one of claims 1 to 8, **characterized in that** the transducer (22) is operable at a frequency of at least 50 kHz.

10. Assembly with a tool unit according to one of claims 1 to 9 and a tool spindle (10) provided with a predetermined interface for holding the tool unit and at least one other tool, more particularly a grinding tool.

11. Assembly according to claim 10, wherein, for the power supply of the transducer (22), the tool spindle (10) comprises slip rings (50), which are connectable to a generator and/or the assembly comprises at least one excitation coil.

12. Assembly according to claim 10 or 11, wherein the assembly is designed for rotational speeds of the tool spindle (10) of over 60,000 revolutions per minute.

## Revendications

1. Unité outil pour l'usinage rotatif assisté par ultrasons d'une pièce, comprenant:
un convertisseur (23) comprenant au moins un transducteur électroacoustique (22) afin de générer et transmettre des vibrations ultrasonores,
un outil (30) accouplé au convertisseur, et
une retenue (21) dans laquelle est logé le convertisseur avec le transducteur et
qui peut être introduite au moins partiellement, par une ouverture de réception formée dans un arbre (13) d'une broche outil (10), dans le logement (11) formé dans l'arbre (13) de la broche outil (10) et peut être relié à celui-ci par l'intermédiaire d'une connexion détachable (27), **caractérisée en ce que**
le convertisseur (23) est retenu en un premier endroit de support (24b) et en au moins un autre endroit de support (24a) dans la retenue (21), lesquels endroits de support (24a, 24b) définissent des noeuds des vibrations ultrasonores générées, la partie dégagée de l'unité outil qui dépasse de l'arbre (13) après l'introduction de l'unité outil dans le logement (11) présentant une longueur (12) qui est inférieure à 100 mm, et le premier endroit de support (24b) étant agencé dans la partie dégagée de telle manière qu'il se situe près de l'ouverture de réception juste en dehors de l'arbre (13).

2. Unité outil selon la revendication 1, **caractérisée en ce que** la retenue (21) comprend au moins un endroit de serrage (27), un filetage, une surface extérieure conique et/ou une surface extérieure cylindrique formant ladite connexion détachable.

3. Unité outil selon la revendication 1 ou 2, **caractérisée en ce qu'**elle est conçue de manière à dépasser, après son introduction dans le logement (11) de la broche outil (10), d'une longueur (L2) inférieure à 50 mm de celle-ci.

4. Unité outil selon l'une des revendications 1 à 3, **caractérisée en ce que** l'outil (30) présente latéralement au moins une ouverture d'admission (40) et à sa tête au moins une ouverture de sortie (42), les deux ouvertures étant reliées par un canal (39, 41).

5. Unité outil selon l'une des revendications 1 à 4, **caractérisée en ce que** l'outil (30) est réalisé sous la forme d'une sonotrode en titane, acier ou aluminium.

6. Unité outil selon l'une des revendications 1 à 5, **caractérisée en ce que** l'outil (30) est un outil de rectification ou de fraisage.

7. Unité outil selon l'une des revendications 1 à 6, **caractérisée en ce que** le corps d'outil (30) servant à l'usinage est fixé à l'outil au moyen d'une connexion détachable.

8. Unité outil selon l'une des revendications 1 à 7, **caractérisée en ce que** le transducteur (22) est un transducteur piézoélectrique ou magnétostrictif.

9. Unité outil selon l'une des revendications 1 à 8, **caractérisée en ce que** le transducteur (22) est capable d'être opéré à une fréquence d'au moins 50 kHz.

10. Agencement comprenant une unité outil selon l'une des revendications 1 à 9 et une broche outil (10), lequel comprend une interface définie pour retenir ladite unité outil et au moins un autre outil, en particulier un outil de rectification.

11. Agencement selon la revendication 10 où, aux fins de l'alimentation en énergie du transducteur (22), la broche outil (10) comprend des bagues collectrices (50) pouvant être connectées à un générateur et/ou l'agencement comprend au moins une bobine d'excitation.

12. Agencement selon la revendication 10 ou 11, celui-ci étant conçu pour des vitesses de rotation de la broche outil (10) supérieures à 60 000 tours par minute.
